# EUROPEAN PATENT APPLICATION

(11) **EP 4 793 476 A1**
(43) Date of publication of application: **19.08.2026**
(21) Application number: 26158886.7
(22) Date of filing: 16.02.2026
(51) Int. Cl.: F02C 3/113, F02C 7/36, B64D 35/00

(54) **TWO-SPEED EPICYCLIC GEARBOX FOR AIRCRAFT PROPULSION SYSTEM**

(30) Priority: 14.02.2025 US 202519054348
(71) Applicant: Pratt & Whitney Canada Corp., (01BE5) Longueuil, QC J4G 1A1 (CA)
(72) Inventor: STRATTON, Russell, J4G 1A1 (01BE5) Longueuil (CA); MENHEERE, Dave, J4G 1A1 (01BE5) Longueuil (CA)
(74) Representative: Dehns

(57) **Abstract**

An aircraft propulsion system is provided that includes a thermal engine (20) and a gearbox (36). The gearbox (36) includes an input shaft (46), an output shaft (48), a first epicyclic gear arrangement (42), a drive gear (44), and a first layshaft assembly (50). The first epicyclic gear arrangement (42) includes a sun gear (54), a plurality of planet gears (56), and a ring gear (60). The sun gear (54) is connected with the drive gear (44). The first layshaft assembly (50) includes a first layshaft input gear (70), a first layshaft ring engagement gear (72), and a first clutch (74). The first layshaft ring engagement gear (72) is engaged with the ring gear (60), and the first layshaft input gear (70) is engaged with the drive gear (44) and the input shaft (46). The first clutch (74) is disposable in a clutch-disengaged configuration and in a clutch-engaged configuration.

## Description

### BACKGROUND OF THE INVENTION

### 1. Technical Field

The present invention relates to aircraft propulsion systems in general, and to aircraft propulsion system gearboxes in particular.

### 2. Background Information

Turboprop engines typically employ variable pitch propellers that permit the propeller pitch to be adjusted during phases of an aircraft mission. Typically, a high propeller speed is used in takeoff while a reduced propeller speed is used in a climb setting and a cruise setting to reduce cabin noise. A further reduced propeller speed may also be used at engine idle.

The power turbine of the turboprop engine is connected to the propeller and the speed of the power turbine may be dictated by the propeller. The efficiency of a power turbine is typically greatest at the maximum speed used in takeoff. Consequently, there may be an efficiency penalty associated with operating the power turbine at a lower than maximum speed; e.g., a reduced speed during a climb setting or a cruise setting.

What is needed is a system and method for a propeller driven aircraft that can provide an improved means of controlling propeller speed and power turbine speed.

### SUMMARY

According to an aspect of the present invention, an aircraft propulsion system is provided that includes a thermal engine and a gearbox. The gearbox includes an input shaft, an output shaft, a first epicyclic gear arrangement, a drive gear, and a first layshaft assembly. The input shaft is driven by the thermal engine. The first epicyclic gear arrangement includes a sun gear, a plurality of planet gears, and a ring gear. The sun gear is connected with the drive gear. The first layshaft assembly extends along a first layshaft rotational axis and includes a first layshaft input gear, a first layshaft ring engagement gear, and a first clutch. The first layshaft ring engagement gear is engaged with the ring gear, and the first layshaft input gear is engaged with the drive gear and the input shaft. The first clutch is disposable in a clutch-disengaged configuration wherein the first layshaft ring engagement gear is uncoupled with the first layshaft input gear, and in a clutch-engaged configuration wherein the first layshaft ring engagement gear is coupled with the first layshaft input gear.

Optionally, and in accordance with the above, the gearbox may further include a second layshaft assembly that extends along a second layshaft rotational axis. The second layshaft assembly may include a second layshaft input gear and a second layshaft ring engagement gear, wherein the second layshaft ring engagement gear is engaged with the ring gear, and the second layshaft input gear is engaged with the drive gear and the input shaft.

Optionally, and in accordance with any of the above, the first and second layshaft rotational axes may be parallel.

Optionally, and in accordance with any of the above, when the first clutch is disposed in the clutch-disengaged configuration, the ring gear may be non-rotational.

Optionally, and in accordance with any of the above, the gearbox may further include a first rotational control device that is configured to allow the ring gear to rotate in a first direction and to prevent rotation of the ring gear in a second direction that is opposite the first direction. The first rotational control device may include a Sprag clutch.

Optionally, and in accordance with any of the above, the second layshaft assembly may include a second clutch that is disposable in a second clutch-disengaged configuration wherein the second layshaft ring engagement gear is uncoupled with the second layshaft input gear, and disposable in a second clutch-engaged configuration wherein the second layshaft ring engagement gear is coupled with the second layshaft input gear.

Optionally, and in accordance with any of the above, the gearbox may be configured to operate in a first mode or in a second mode. In the first mode, the output shaft may be driven solely by a first power transmitted from the input shaft and through the sun gear, and in the second mode the output shaft may be driven by the first power transmitted from the input shaft and through the sun gear, and by a second power transmitted from the input shaft, through the first layshaft ring engagement gear to the ring gear, and from the ring gear to the output shaft.

Optionally, and in accordance with any of the above, the gearbox may be configured to operate in a first mode or in a second mode. In the first mode the ring gear is maintained non-rotational. In the second mode the ring gear is rotationally driven.

Optionally, and in accordance with any of the above, the first layshaft assembly may include a first layshaft that extends along the first layshaft rotational axis, and a first layshaft epicyclic gear arrangement.

Optionally, and in accordance with any of the above, the first layshaft (FL) epicyclic gear arrangement may include an FL sun gear, a plurality of FL planet gears, an FL carrier, and an FL ring gear. The FL sun gear may be connected to the first clutch, and the FL carrier may be connected to the plurality of FL planet gears and to the first layshaft ring gear.

Optionally, and in accordance with any of the above, when the first clutch is in the clutch-disengaged configuration both the first layshaft ring engagement gear and the FL sun gear may be uncoupled with the first layshaft input gear, and when the first clutch is in the clutch-engaged configuration both the first layshaft ring engagement gear and the FL sun gear may be coupled with the first layshaft input gear.

Optionally, and in accordance with any of the above, the first layshaft assembly further may include a rotational control device configured to allow the FL carrier to rotate in a first direction and to prevent rotation of the FL carrier in a second direction that is opposite the first direction. The rotational control device may include a Sprag clutch.

Optionally, and in accordance with any of the above, the thermal engine may be a gas turbine engine.

According to an aspect of the present invention, an aircraft propulsion system gearbox is provided that includes an input shaft, an output shaft, a drive gear, a first epicyclic gear arrangement, and a first layshaft assembly. The first epicyclic gear arrangement includes a sun gear, a plurality of planet gears, and a ring gear. The sun gear is connected with the drive gear. The first layshaft assembly extends along a first layshaft rotational axis and includes a first layshaft input gear, a first layshaft ring engagement gear, and a first clutch. The first layshaft ring engagement gear is engaged with the ring gear, and the first layshaft input gear is engaged with the drive gear and the input shaft. The first clutch is disposable in a clutch-disengaged configuration wherein the first layshaft ring engagement gear is uncoupled with the first layshaft input gear, and in a clutch-engaged configuration wherein the first layshaft ring engagement gear is coupled with the first layshaft input gear.

Optionally, and in accordance with the above, the gearbox may include a second layshaft assembly that extends along a second layshaft rotational axis and includes a second layshaft input gear and a second layshaft ring engagement gear. The second layshaft ring engagement gear is engaged with the ring gear, and the second layshaft input gear is engaged with the drive gear and the input shaft.

Optionally, and in accordance with any of the above, the second layshaft assembly may include a second clutch that is disposable in a second clutch-disengaged configuration wherein the second layshaft ring engagement gear is uncoupled with the second layshaft input gear, and disposable in a second clutch-engaged configuration wherein the second layshaft ring engagement gear is coupled with the second layshaft input gear.

Optionally, and in accordance with any of the above, the first layshaft assembly may include a first layshaft epicyclic gear arrangement that has an FL sun gear, a plurality of FL planet gears, an FL carrier, and an FL ring gear, wherein the FL sun gear may be connected to the first clutch, and the FL carrier may be connected to the plurality of FL planet gears and to the first layshaft ring engagement gear.

Optionally, and in accordance with any of the above, the first and second layshaft rotational axes may be parallel.

Optionally, and in accordance with any of the above, when the first clutch is disposed in the clutch-disengaged configuration, the ring gear may be non-rotational.

Optionally, and in accordance with any of the above, the gearbox may further include a first rotational control device that is configured to allow the ring gear to rotate in a first direction and to prevent rotation of the ring gear in a second direction that is opposite the first direction. The first rotational control device may include a Sprag clutch.

Optionally, and in accordance with any of the above, the gearbox may be configured to operate in a first mode or in a second mode. In the first mode, the output shaft may be driven solely by a first power transmitted from the input shaft and through the sun gear, and in the second mode the output shaft may be driven by the first power transmitted from the input shaft and through the sun gear, and by a second power transmitted from the input shaft, through the first layshaft ring engagement gear to the ring gear, and from the ring gear to the output shaft.

Optionally, and in accordance with any of the above, the gearbox may be configured to operate in a first mode or in a second mode. In the first mode the ring gear is maintained non-rotational. In the second mode the ring gear is rotationally driven.

Optionally, and in accordance with any of the above, the first layshaft assembly may include a first layshaft that extends along the first layshaft rotational axis, and a first layshaft epicyclic gear arrangement.

Optionally, and in accordance with any of the above, the first layshaft (FL) epicyclic gear arrangement may include an FL sun gear, a plurality of FL planet gears, an FL carrier, and an FL ring gear. The FL sun gear may be connected to the first clutch, and the FL carrier may be connected to the plurality of FL planet gears and to the first layshaft ring gear.

Optionally, and in accordance with any of the above, when the first clutch is in the clutch-disengaged configuration both the first layshaft ring engagement gear and the FL sun gear may be uncoupled with the first layshaft input gear, and when the first clutch is in the clutch-engaged configuration both the first layshaft ring engagement gear and the FL sun gear may be coupled with the first layshaft input gear.

Optionally, and in accordance with any of the above, the first layshaft assembly further may include a rotational control device configured to allow the FL carrier to rotate in a first direction and to prevent rotation of the FL carrier in a second direction that is opposite the first direction. The rotational control device may include a Sprag clutch.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of an exemplary gas turbine engine with a gearbox and a propulsion unit.
FIG. 2 is a diagrammatic perspective view of a present invention reduction gearbox embodiment.
FIG. 3 is a diagrammatic view of a present invention reduction gearbox embodiment.
FIG. 4 is a diagrammatic representation of a present invention epicyclic gear arrangement with the ring gear in a non-rotational mode.
FIG. 4A is a diagrammatic representation of a present invention epicyclic gear arrangement with the ring gear in a rotational mode.
FIG. 5 is a table illustrating an example of present invention two-speed gearbox operation.
FIG. 6 is a diagrammatic view of a present invention reduction gearbox embodiment.
FIG. 6A is a diagrammatic enlargement of the portion of the reduction gearbox embodiment shown in FIG. 6.

### DETAILED DESCRIPTION

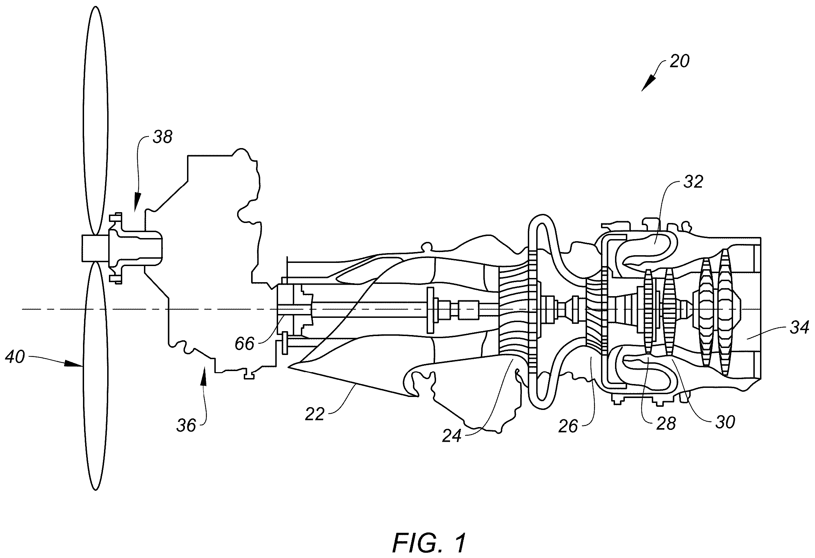

FIG. 1 is a diagrammatic cross-sectional view of gas turbine engine 20 that includes an inlet duct 22, a low pressure compressor 24, a high pressure compressor 26, a high pressure turbine 28, a low pressure turbine 30, and a combustor 32. The gas turbine engine 20 also includes a power turbine 34. The present invention is not limited to the gas turbine engine 20 shown in FIG. 1 and may be used with other gas turbine engine 20 configurations or other thermal engine configurations. The gas turbine engine 20 is in communication with a gearbox 36. The gearbox 36 is in communication with a propulsion unit 38 that includes a propeller 40. The present invention is not limited to use with propulsion units 38 that include propellers 40.

The gearbox 36 may assume different configurations. The term "gearbox" as used herein may refer to a reduction gearbox that is configured to accept an input rotational drive at a first rotational speed (S1) and at a first torque (T1) and produce an output rotational drive at a second rotational speed (S2) and at a second torque (T2), wherein the first rotational speed is greater than the second rotational speed (S1 > S2) and the second torque is greater than the first torque (T2 > T1).

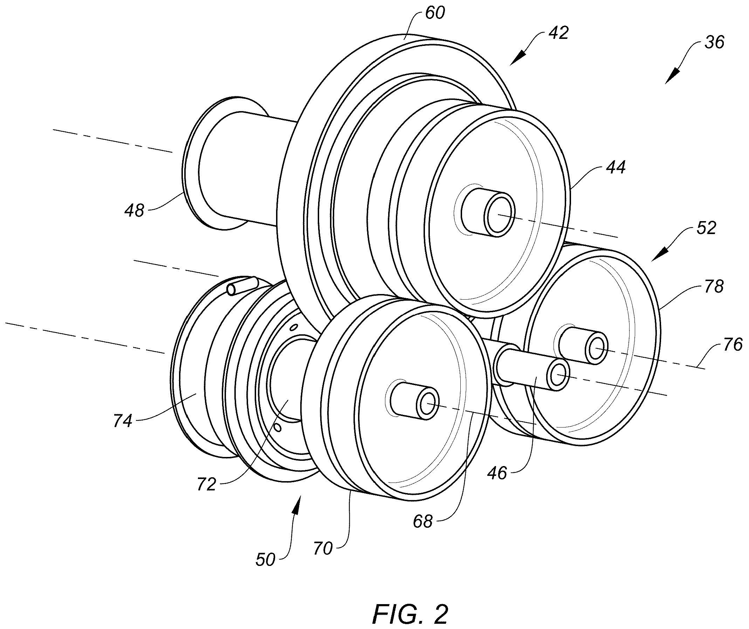

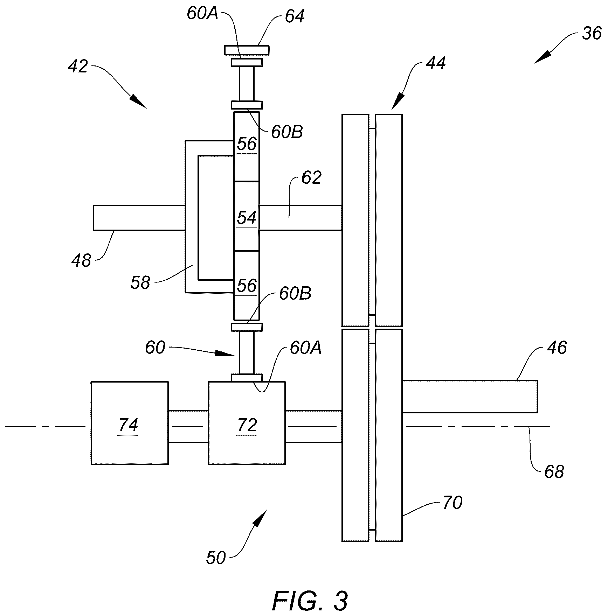

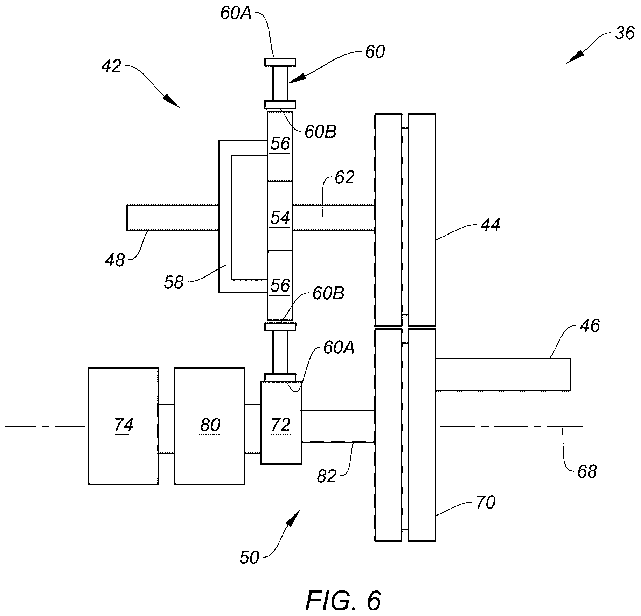

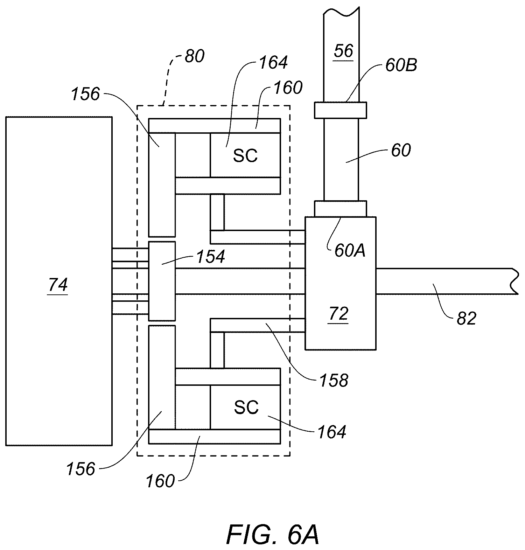

The present invention gearbox 36 embodiment diagrammatically shown in FIGS. 2 and 3 is a two-speed reduction gearbox 36 that includes an epicyclic gear arrangement 42, a drive gear 44, an input shaft 46, an output shaft 48, a first layshaft assembly 50, and a second layshaft assembly 52. As will be detailed herein, certain present invention embodiments may include the epicyclic gear arrangement 42 and include an epicyclic gear arrangement 80 as part of a layshaft assembly; e.g., see FIG. 6. To avoid confusion within the present description, the epicyclic gear arrangement 42 will be referred to as the "output shaft epicyclic gear arrangement 42" or the "OS epicyclic gear arrangement 42", and the epicyclic gear arrangement 80 associated with a layshaft assembly will be referred to as the "layshaft epicyclic gear arrangement 80" or the "LS epicyclic gear arrangement 80".

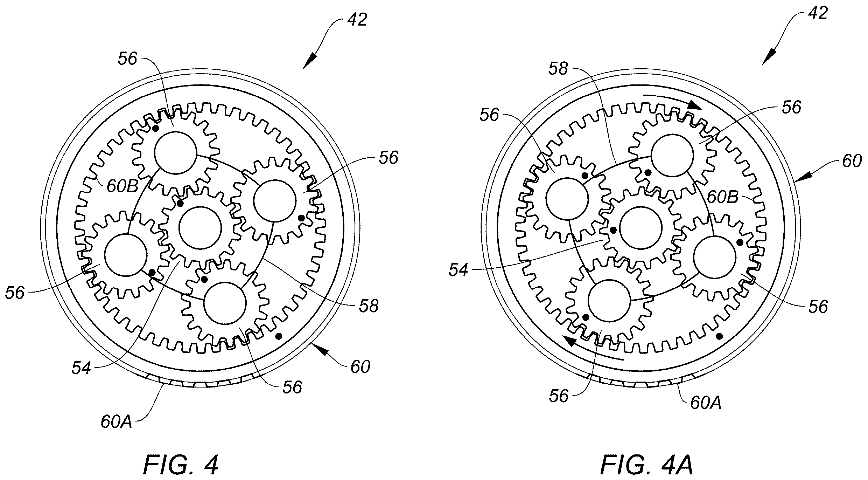

Referring to FIG. 3, the OS epicyclic gear arrangement 42 includes a sun gear 54, a plurality of planet gears 56, a carrier 58, and a ring gear 60. A shaft 62 connects the sun gear 54 to the drive gear 44. A ring gear rotational control device 64 is shown in FIG. 3. The ring gear 60 has an outer diameter surface 60A configured with gear teeth, and an inner diameter surface 60B configured with gear teeth. The sun gear 54 is engaged with the planet gears 56 and the planet gears 56 are engaged with the gear teeth disposed on the inner diameter surface 60B of the ring gear 60. In the OS epicyclic gear arrangement 42 diagrammatically shown in FIGS. 4 and 4A, four planet gears 56 are shown engaged with the sun gear 54 and the ring gear 60. The present invention is not limited to any particular number of planet gears 56 in the OS epicyclic gear arrangement 42. The carrier 58 of the OS epicyclic gear arrangement 42 is connected to each of the planet gears 56 and is connected to the output shaft 48 of the gearbox 36. As detailed herein, in some embodiments, the ring gear 60 may be connected to the output shaft. The output shaft 48 may be directly or indirectly connected to the propulsion unit 38; e.g., see FIG. 1. An example of a gearbox output shaft 48 that is directly engaged with the propulsion unit 38 is one wherein the gearbox output shaft 48 and the drive elements of the propulsion unit 38 (e.g., the propeller shaft) are connected to one another and rotate at the same speed. An example of a gearbox output shaft 48 that is indirectly engaged with the propulsion unit 38 is one wherein the gearbox output shaft 48 and the drive elements of the propulsion unit 38 (e.g., the propeller shaft) are both connected to a gear arrangement and the engine shaft and gearbox input shaft 46 rotate at different rotational speeds.

The ring gear rotational control device 64 is configured to allow the ring gear 60 to rotate in a first direction and to prevent the ring gear 60 from rotating in an opposite second direction. A Sprag clutch is an example of a device that can be used as a ring gear rotational control device 64. The present invention is not limited to using a Sprag clutch as a ring gear rotational control device 64. For example, in some embodiments a ring gear rotational control device 64 may be configured to allow the ring gear 60 to rotate when a predetermined condition exists (e.g., when a layshaft ring engagement gear is engaged to drive the ring gear) and to not allow the ring gear 60 to rotate when a predetermined condition exists (e.g., when a layshaft ring engagement gear is disengaged with the ring gear). This configuration may be used when the direction of ring gear rotation when the clutch is engaged is the same direction for which the ring gear needs to be locked when the clutch is disengaged. Examples of how a layshaft ring engagement gear may be engaged with, or disengaged from, a ring gear are described herein.

The gearbox input shaft 46 is directly or indirectly engaged with, and is driven by, the gas turbine engine 20. An example of a gearbox input shaft 46 that is directly engaged with the gas turbine engine 20 is one wherein the gearbox input shaft 46 is connected to an engine shaft and rotates at the same speed as the engine shaft. An example of a gearbox input shaft 46 that is indirectly engaged with the gas turbine engine 20 is one wherein the gearbox input shaft 46 and the engine shaft are both connected to a gear arrangement (not shown) and the engine shaft and gearbox input shaft 46 rotate at different rotational speeds. In the gas turbine engine 20 shown in FIG. 1, a shaft 66 extending from the power turbine 34 is an example of an engine shaft that may be directly or indirectly engaged with the gearbox input shaft 46. As will be detailed herein, the first layshaft assembly 50 and the second layshaft assembly 52 (see FIG. 2) are engaged with the gearbox input shaft 46.

The first layshaft assembly 50 is disposed along a first layshaft rotational axis 68 and includes a first layshaft input gear 70, a first layshaft ring engagement gear 72, and a first clutch 74. The first layshaft input gear 70 is engaged with the gearbox input shaft 46. The first layshaft ring engagement gear 72 is engaged with the ring gear 60 of the OS epicyclic gear arrangement 42 and is in communication with the first clutch 74. The first clutch 74 is disposable in clutch-engaged configuration or in a clutch-disengaged configuration. In the clutch-engaged configuration, the first clutch 74 couples the first layshaft ring engagement gear 72 with the first layshaft input gear 70. Hence, in the clutch-engaged configuration, the first layshaft ring engagement gear 72 is driven via the first layshaft input gear 70 and the gearbox input shaft 46, and the first layshaft ring engagement gear 72 drives the ring gear 60 of the OS epicyclic gear arrangement 42. In the clutch-disengaged configuration, the first clutch 74 does not couple the first layshaft ring engagement gear 72 and the first layshaft input gear 70 and consequently the first layshaft ring engagement gear 72 is not driven.

In some embodiments, the second layshaft assembly 52 may be configured substantially the same as the first layshaft assembly 50; e.g., configured such that the second layshaft assembly 52 is disposed along a second layshaft rotational axis 76 and includes a second layshaft input gear 78, a second layshaft ring gear (not shown), and a second clutch (not shown). The second layshaft input gear 78 is engaged with the gearbox input shaft 46 and the second layshaft ring gear is engaged with the ring gear 60 of the OS epicyclic gear arrangement 42 and is in communication with the second clutch. The second clutch is disposable in a clutch-disengaged configuration or in a clutch-engaged configuration (e.g., like the first clutch 74.

In some embodiments, the second layshaft assembly 52 may be configured substantially the same as the first layshaft assembly 50 but without a clutch. In the absence of a clutch, the second layshaft ring gear may be engaged with the ring gear 60 of the OS epicyclic gear arrangement 42 as an idler gear.

As detailed herein, gas turbine engines (e.g., a turboprop) very often have an range of rotational speeds in which the engine 20 has desirable efficiency and a range of rotational speeds in which the engine 20 has less than desirable efficiency. In many instances, it is desirable to have a propeller rotational speed that is less than the rotational speed of the engine 20 powering the propeller.

Embodiments of the present invention two-speed gearbox 36 provide a structure that allows the gas turbine engine 20 to operate in a rotational speed range that is beneficial (e.g., efficient) for the gas turbine engine 20 and allows the propulsion system (e.g., the propeller) to be driven in a rotational speed range that provides a desired amount of thrust and an acceptable level of noise.

During the operation of a gas turbine engine 20 with a propulsion unit 38 and a present invention two-speed gearbox 36, the gas turbine engine 20 drives the input shaft 46 of the gearbox 36. As indicated herein, a power turbine shaft 66 may directly or indirectly provide drive to the input shaft 46 of the gearbox 36. The input shaft 46 of the gearbox 36, in turn, drives the first and second layshaft assemblies; i.e., drives the first layshaft input gear 70 and the second layshaft input gear 78.

As detailed herein, the present invention two-speed gearbox 36 may be operated in a first mode (e.g., a "low-speed mode") or in a second mode (e.g., a "high-speed mode"). In both modes, the input shaft 46 of the gearbox 36 drives the first and second layshaft input gears 70, 78 and the first and second layshaft input gears 70, 78, in turn, drive the drive gear 44. The drive gear 44 is connected by shaft 62 with the sun gear 54 of the OS epicyclic gear arrangement 42. Hence, in the first mode and the second mode, the drive gear 44 is driven and the drive gear 44, in turn, drives the sun gear 54, planet gears 56, and carrier 58 of the OS epicyclic gear arrangement 42.

As described herein, the first layshaft assembly 50, or the second layshaft assembly 52, or both may include a clutch 74 disposable in a clutch-engaged configuration or in a clutch-disengaged configuration. To facilitate the description herein, the operation of the present invention will be described hereinafter in terms of only the first layshaft assembly 50 having a clutch 74 unless otherwise indicated. To be clear, the present invention is not limited to only the first layshaft assembly 50 having a clutch 74.

In the first mode, the first layshaft clutch 74 is disposed in the clutch-disengaged configuration. The first layshaft ring engagement gear 72 is not coupled with the first layshaft input gear 70. The first layshaft ring engagement gear 72 is, therefore, not driven and therefore does not drive the ring gear 60 of the OS epicyclic gear arrangement 42. The gas turbine engine 20 (e.g., the power turbine shaft 66) drives the gearbox input shaft 46 and the gearbox input shaft 46 drives both the first and second layshaft assemblies 50, 52; i.e., drives the first layshaft input gear 70 and the second layshaft input gear 78. The first and second layshaft input gears 70, 78, in turn, drive the drive gear 44. The drive gear 44 is connected to the sun gear 54 of the OS epicyclic gear arrangement 42. The first and second layshaft input gears 70, 78 drive the drive gear 44, and the drive gear 44 drives the sun gear 54, planet gears 56, and carrier 58 of the OS epicyclic gear arrangement 42. The carrier 58 drives the gearbox output shaft 48, which in turn drives the propulsion unit 38.

As detailed herein, the ring gear rotational control device 64 is configured to allow the ring gear 60 to rotate in a first direction and to prevent the ring gear 60 from rotating in an opposite second direction. In the first mode, the ring gear rotational control device 64 prevents the ring gear 60 from rotating.

In the second mode, the clutch 74 is disposed in the clutch-engaged configuration wherein the clutch 74 couples the first layshaft ring engagement gear 72 with the first layshaft input gear 70. Hence, in the clutch-engaged configuration, the first layshaft ring engagement gear 72 is driven via the first layshaft input gear 70. The first layshaft ring engagement gear 72, in turn, drives the ring gear 60 of the OS epicyclic gear arrangement 42. It should be noted that the ring gear rotational control device 64 does not prevent the first layshaft ring engagement gear 72 from driving the ring gear 60 of the OS epicyclic gear arrangement 42. The first layshaft ring engagement gear 72 driving the ring gear 60 causes the ring gear 60 to rotate, and the rotation of the ring gear 60 causes the carrier 58 of the OS epicyclic gear arrangement 42 to rotate faster than it would if the ring gear 60 was stationary. As a result, in the second mode power is transmitted to the output shaft 48 of the gearbox 36 along a first path via the first and second layshaft input gears 70, 78 driving the drive gear 44, and the drive gear 44 driving the OS epicyclic gear arrangement 42, and along a second path via the first layshaft ring engagement gear 72 of the first layshaft assembly 50 driving the ring gear 60 of the OS epicyclic gear arrangement 42. Exactly how much of the power transferred to the gearbox output shaft 48 is transferred along the first path and how much along the second path will depend on the overall gear ratio of the gears within the gearbox 36. It is understood that a ratio of approximately 4:1 (first path : second path) is representative of what would work in many applications. In this example, twenty percent (20%) of the power transferred from the gas turbine engine 20 to the propulsion unit 38 would be transferred through the clutched first layshaft assembly 50. Moreover, the present invention two-speed gearbox 36 allows the gas turbine engine 20 to be operated in a rotational speed range that is beneficial for the gas turbine engine 20 and allows the propulsion system (e.g., the propeller) to be driven in a desirable rotational speed range.

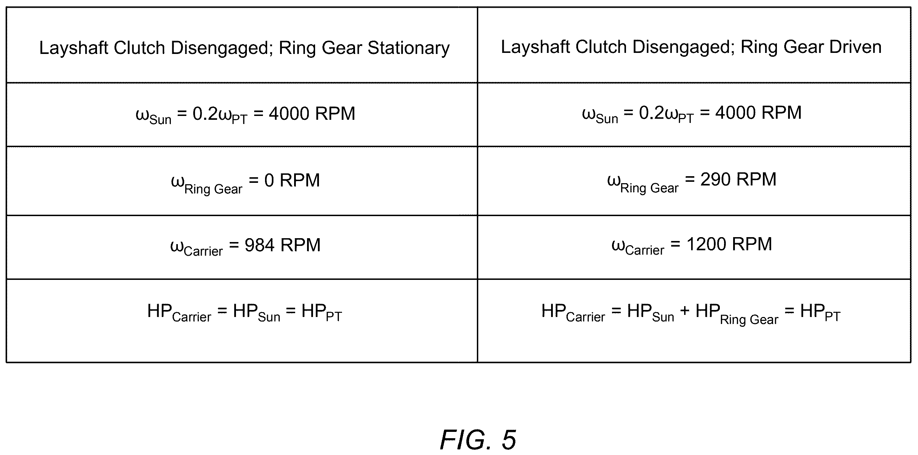

The table shown in FIG. 5 provides an illustration of the differences between the present invention two-speed gearbox 36 operating in the first mode (e.g., the "low-speed mode") or in the second mode (e.g., the "high-speed mode"). The data in the table is provided to illustrate an example and is not intended to be limiting.

As indicated herein, the operation of the present invention is described above in terms of only the first layshaft assembly 50 having a clutch 74, but the present invention is not limited to only one layshaft assembly having a clutch. Present invention embodiments wherein each layshaft assembly 50, 52 includes a clutch can provide substantial benefits. For example, when both the first and second layshaft assemblies 50, 52 have a clutch, the system is provided with desirable redundancy and more operational modes; e.g., operate a single clutch, switch from operating a first clutch 74 to operating a second clutch, operate the clutches together, and the like. As another example, if the ring gear rotational control device 64 is inoperable, one of the clutched layshaft assemblies can control the rotation of ring gear 60 of the OS epicyclic gear arrangement 42.

In the first mode (e.g., the "low-speed mode") described above, the ring gear 60 of the OS epicyclic gear arrangement 42 remains stationary and in the second mode (e.g., the "high-speed mode"), the ring gear 60 of the OS epicyclic gear arrangement 42 is rotationally driven. In both of these modes, the carrier 58 of the OS epicyclic gear arrangement 42 is rotationally driven and the carrier 58 in turn drives the output shaft 48 of the gearbox 36. In an alternative configuration, the output shaft 48 of the gearbox 36 could be driven by the ring gear 60 of the OS epicyclic gear arrangement 42 and rotation of the carrier 58 could be controlled to achieve the low-speed mode and the high-speed mode. For example, in a first mode (e.g., the "low-speed mode") of this embodiment, the carrier 58 of the OS epicyclic gear arrangement 42 may remain stationary and the ring gear 60 rotates, and in a second mode (e.g., the "high-speed mode"), the carrier 58 may be rotationally driven by one or both layshaft assemblies; e.g., by the first layshaft assembly 50.

In yet another alternative configuration, the ring gear 60 of the OS epicyclic gear arrangement 42 may be maintained in a high-speed mode with the layshaft assembly clutch(es) 74 in a clutch-disengaged configuration. In this configuration, the low-speed mode would include the layshaft assembly clutch(es) 74 disposed in a clutch-engaged configuration, driving the OS epicyclic gear arrangement 42 ring in a manner that slows the rotational speed of the carrier 58. The ring gear rotational control device 64 is configured to allow the ring gear 60 to be driven in a first direction and to prevent the ring gear 60 from rotating in an opposite second direction.

In some present invention embodiments, a layshaft assembly that includes a clutch may also include a epicyclic gear assembly; i.e., anLS epicyclic gear arrangement 80. Embodiments of the LS epicyclic gear assembly can provide a geared speed reduction for a layshaft that is physically compact.

FIG. 6 is a diagrammatic representation of a present invention two-speed gearbox 36 embodiment that includes an OS epicyclic gear arrangement 42, an drive gear 44, an input shaft 46, an output shaft 48, a first layshaft assembly 50, and a second layshaft assembly 52. The second layshaft assembly 52 is not shown in the diagrammatic gearbox 36 representation shown in FIG. 6. However, the first and second layshaft assemblies may be oriented as shown in FIG. 2.

The first layshaft assembly 50 is disposed along the first layshaft rotational axis 68 and includes a first layshaft 82, a first layshaft input gear 70, a first layshaft ring gear, a first LS epicyclic gear arrangement 80, and a first clutch 74. The first layshaft input gear 70 is engaged with the gearbox input shaft 46 and is mounted on the first layshaft 82. The first layshaft ring engagement gear 72 is engaged with the ring gear 60 of the OS epicyclic gear arrangement 42. The first LS epicyclic gear arrangement 80 and the first clutch 74 are in communication with the first layshaft 82.

To facilitate the description herein, FIG. 6A is a diagrammatic enlargement of the portion of the first layshaft assembly 50 that includes the first layshaft ring engagement gear 72, the first LS epicyclic gear arrangement 80, and the first clutch 74. A portion of the ring gear 60 of the OS epicyclic gear arrangement 42 is shown engaged with the first layshaft ring engagement gear 72.

The first LS epicyclic gear arrangement 80 includes an FL sun gear 154, a plurality of FL planet gears 156, an FL carrier 158, and an FL ring gear 160. The first layshaft 82 extends through the FL sun gear 154, but the FL sun gear 154 is not fixed to the first layshaft 82. The first layshaft 82 is in communication with the first clutch 74. The FL sun gear 154 is engaged with the FL planet gears 156 and the FL planet gears 156 are engaged with the FL ring gear 160. The LS epicyclic gear arrangement 80 is not limited to any particular number of FL planet gears 156 other than two or more. The FL ring gear 160 is mounted so as to be stationary relative to the FL planet gears 156. The FL carrier 158 extends between the PL planet gears 156 and the first layshaft ring engagement gear 72. Alternatively, the FL carrier 158 may be stationary, the FL sun gear 154 rotating relative to the FL planet gears 156, and the FL ring gear 160 engaged with the first layshaft ring engagement gear 72.

The first clutch 74 is disposable in a clutch-engaged configuration or in a clutch-disengaged configuration. In the clutch-engaged configuration, the first clutch 74 transfers rotational drive from the first layshaft 82 to the FL sun gear 154. The FL sun gear 154, in turn, drives the FL planet gears 156 and the FL planet gears 156 drive the FL carrier 158. The FL carrier 158 is connected to the first layshaft ring engagement gear 72. Hence, rotation of the FL carrier 158 causes rotation of the first layshaft ring engagement gear 72 and the first layshaft ring engagement gear 72 transmits power to the ring gear 60 of the OS epicyclic gear arrangement 42.

In the clutch-disengaged configuration, the first clutch 74 does not transfer rotational drive from the first layshaft 82 to the FL sun gear 154. Hence, in the clutch-disengaged configuration, the first layshaft ring engagement gear 72 may rotate freely.

In the embodiment shown in FIG. 6A, one or more rotational control devices 164 (e.g., Sprag clutches) are configured to allow the FL carrier 158 and connected first layshaft ring engagement gear 72 to rotate in a first direction and to prevent the same from rotating in an opposite second direction. As indicated herein, the first layshaft ring engagement gear 72 is in geared communication with the ring gear 60 of the OS epicyclic gear arrangement 42. The one or more rotational control devices 164 that allow the FL carrier 158 and connected first layshaft ring engagement gear 72 to rotate in a first direction and to prevent the same from rotating in an opposite second direction, therefore also allow the ring gear 60 of the OS epicyclic gear arrangement 42 to rotate in one direction and prevent the same from rotating in an opposite direction.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An aircraft propulsion system gearbox (36), comprising:
an input shaft (46);
an output shaft (48);
a drive gear (44);
a first epicyclic gear arrangement (42) that includes a sun gear (54), a plurality of planet gears (56), and a ring gear (60), wherein the sun gear (54) is connected with the drive gear (44); and
a first layshaft assembly (50) that extends along a first layshaft rotational axis (68) and includes a first layshaft input gear (70), a first layshaft ring engagement gear (72), and a first clutch (74), wherein the first layshaft ring engagement gear (72) is engaged with the ring gear (60), and the first layshaft input gear (70) is engaged with the drive gear (44) and the input shaft (46); and
wherein the first clutch (74) is disposable in a disengaged configuration in which the first layshaft ring engagement gear (72) is uncoupled with the first layshaft input gear (70), and in an engaged configuration in which the first layshaft ring engagement gear (72) is coupled with the first layshaft input gear (70).

2. The aircraft propulsion system gearbox (36) of claim 1, further comprises a second layshaft assembly (52) that extends along a second layshaft rotational axis (76) and includes a second layshaft input gear (78) and a second layshaft ring engagement gear, wherein the second layshaft ring engagement gear is engaged with the ring gear (60), and the second layshaft input gear (78) is engaged with the drive gear (44) and the input shaft (46).

3. The aircraft propulsion system gearbox (36) of claim 2, wherein the first layshaft rotational axis (68) and the second layshaft rotational axis (76) are parallel.

4. The aircraft propulsion system gearbox (36) of claim 2 or 3, wherein the second layshaft assembly (52) further comprises a second clutch that is disposable in a second disengaged configuration in which the second layshaft ring engagement gear is uncoupled with the second layshaft input gear (78), and disposable in a second engaged configuration in which the second layshaft ring engagement gear is coupled with the second layshaft input gear (78).

5. The aircraft propulsion system gearbox (36) of any preceding claim, wherein, when the first clutch (74) is disposed in the disengaged configuration, the ring gear (60) is non-rotational.

6. The aircraft propulsion system gearbox (36) of any preceding claim, further comprising a first rotational control device configured to allow the ring gear (60) to rotate in a first direction and to prevent rotation of the ring gear (60) in a second direction that is opposite the first direction, wherein, optionally, the first rotational control device includes a Sprag clutch (74).

7. The aircraft propulsion system gearbox (36) of any preceding claim, wherein:
the gearbox (36) is configured to operate in a first mode or in a second mode;
in the first mode the output shaft (48) is driven solely by a first power transmitted from the input shaft (46) and through the sun gear (54); and
in the second mode the output shaft (48) is driven by the first power transmitted from the input shaft (46) and through the sun gear (54), and by a second power transmitted from the input shaft (46), through the first layshaft ring engagement gear (72) to the ring gear (60), and from the ring gear (60) to the output shaft (48).

8. The aircraft propulsion system gearbox (36) of any preceding claim, wherein the gearbox (36) is configured to operate in a first mode or in a second mode, wherein in the first mode the ring gear (60) is maintained non-rotational, and wherein in the second mode the ring gear (60) is rotationally driven.

9. The aircraft propulsion system gearbox (36) of any preceding claim, wherein the first layshaft assembly (50) includes a first layshaft (82) that extends along the first layshaft rotational axis (68), and a first layshaft epicyclic gear arrangement (80).

10. The aircraft propulsion system gearbox (36) of claim 9, wherein:
the first layshaft, FL, epicyclic gear arrangement (80) includes an FL sun gear (154), a plurality of FL planet gears (156), an FL carrier (158), and an FL ring gear (160); and
the FL sun gear (154) is connected to the first clutch (74), and the FL carrier (158) is connected to the plurality of FL planet gears (156) and to the first layshaft ring engagement gear (72).

11. The aircraft propulsion system gearbox (36) of any of claims 1 to 8, wherein:
the first layshaft, FL, assembly (50) includes a first layshaft epicyclic gear arrangement (80) that has an FL sun gear (154), a plurality of FL planet gears (156), an FL carrier (158), and an FL ring gear (160); and
the FL sun gear (154) is connected to the first clutch (74), and the FL carrier (158) is connected to the plurality of FL planet gears (156) and to the first layshaft ring engagement gear (72).

12. The aircraft propulsion system gearbox (36) of claim 10 or 11, wherein the first layshaft assembly (50) further comprises a rotational control device (164) configured to allow the FL carrier (158) to rotate in a first direction and to prevent rotation of the FL carrier (158) in a second direction that is opposite the first direction.

13. The aircraft propulsion system gearbox (36) of any of claims 10 to 12, wherein when the first clutch (74) is in the disengaged configuration both the first layshaft ring engagement gear (72) and the FL sun gear (154) are uncoupled with the first layshaft input gear (70), and when the first clutch (74) is in the engaged configuration both the first layshaft ring engagement gear (72) and the FL sun gear (154) are coupled with the first layshaft input gear (70).

14. An aircraft propulsion system, comprising:
a thermal engine (20); and
the aircraft propulsion system gearbox (36) of any preceding claim, wherein the input shaft (46) is driven by the thermal engine (20).

15. The aircraft propulsion system of claim 14, wherein the thermal engine (20) is a gas turbine engine.
